# EUROPEAN PATENT APPLICATION

(11) **EP 2 549 569 A1**
(43) Date of publication of application: **23.01.2013**
(21) Application number: 11756430.2
(22) Date of filing: 18.03.2011
(51) Int. Cl.: H01M 4/133, C01B 31/02, C01B 31/04, H01M 4/587, H01M 4/62, H01M 10/0525, H01M 10/0567

(54) **LITHIUM ION SECONDARY BATTERY**

(30) Priority: 18.03.2010 JP 2010063030
(71) Applicant: NEC Energy Devices, Ltd., Chuo-ku Sagamihara-shi Kanagawa 252-5298 (JP)
(72) Inventor: SASAKI, Hideaki, Sagamihara-shi Kanagawa 252-5298 (JP); NOGUCHI, Takehiro, Sagamihara-shi Kanagawa 252-5298 (JP)
(74) Representative: Vossius & Partner
(86) International application number: PCT/JP2011/056533
(87) International publication number: WO 2011/115247

(57) **Abstract**

There is provided a lithium ion secondary battery excellent in cycle characteristics in which the conductivity of an electrode using a graphite material which is less deformed and oriented by pressurization is improved. A negative electrode mixture which includes at least a negative electrode active material comprising graphite as a main component, a binder, and a conductive aid has a ratio of a peak intensity of a (002) plane to a peak intensity of a (110) plane in an X-ray diffraction spectrum of 30 or more and 70 or less, the spectrum being measured after the negative electrode mixture is pressed at 98 MPa (1000 kgf/cm²), and the conductive aid includes carbon black having a DBP absorption (cm³/100 g) of 250 or more and 500 or less.

## Description

### Technical Field

The present invention relates to a lithium ion secondary battery having high capacity and excellent in cycle characteristics.

### Background Art

A lithium ion secondary battery has a smaller volume and a higher weight capacity density than those of conventional secondary batteries such as an alkaline storage battery. Moreover, since a lithium ion secondary battery can produce high voltage, it is widely employed as a power source for small equipment and is widely used as a power source for mobile computing devices such as a cellular phone and a notebook personal computer. In recent years, the demand for a large-sized battery, which has a large capacity and for which a long life is required, for example, for an electric vehicle (EV) and a power storage field, is increased from the rise of consciousness to the concerns to environmental problems and energy saving besides the small-sized mobile computing device applications.

The large-sized batteries as described above are required to have a high energy density and to show less degradation of discharge capacity to a repetition of charge and discharge, that is, to be excellent in cycle characteristics.

Generally, a lithium ion secondary battery is configured to include a negative electrode in which a carbon material capable of absorbing and releasing lithium ions is used as a negative electrode active material, a positive electrode in which a lithium composite oxide capable of absorbing and releasing lithium ions is used as a positive electrode active material, a separator for separating the negative electrode from the positive electrode, and a nonaqueous electrolyte solution in which a lithium salt is dissolved in a nonaqueous solvent.

Here, examples of the carbon material used as a negative electrode active material include amorphous carbon and highly crystalline graphite. Graphite is generally used in applications in which particularly high energy density is required.

Graphite material is roughly classified into natural graphite and artificial graphite. Generally, natural graphite has such a problem that it has a large specific surface area, a high reactivity with an electrolyte solution, and is deformed by pressurization and easily oriented. Therefore, natural graphite had difficulty in providing high cycle characteristics which are required in the battery for electric vehicles. Then, an attempt has been made to reduce the reactivity of natural graphite with an electrolyte solution by reducing the specific surface area by coating the surface of the particles with amorphous carbon. Further, an attempt has been made to reduce the orientation of natural graphite by making it into a spheroidal shape. However, a fundamental solution has not been achieved.

On the other hand, it is said that artificial graphite is excellent in cycle characteristics because it has a lower reactivity with an electrolyte solution and the particles are less oriented than natural graphite. However, artificial graphite has a variety of particle properties such as crystallinity, particle shape, and particle hardness depending on a production method thereof, and it is impossible to sufficiently draw performance of artificial graphite, unless the electrode is designed so as to be suitable for the particle properties thereof.

For example, Patent Literature 1 discloses a carbon material for battery electrode in which the particles are less deformed and oriented by pressurization and in which the material has high coulomb efficiency.

### Citation List

### Patent Literature

Patent Literature 1: JP2005-158718A

### Summary of Invention

### Technical Problem

However, it has been found that, in the material described in Patent Literature 1 which is deformed by pressurization to be less oriented, electrical contact between particles is not easily made because of low adhesiveness between particles in the electrode, and as a result, the conductivity of the electrode may be greatly reduced by the expansion and shrinkage accompanying the charge and discharge cycle, thus reducing the cycle characteristics.

An object of the exemplary embodiment is to provide a lithium ion secondary battery excellent in cycle characteristics by preventing reduction in the conductivity of the electrode which poses a problem when using a graphite material which is less deformed and less oriented by pressurization.

### Solution to Problem

As a result of intensive studies to solve the above problem, the present inventors have found that it is possible to obtain a negative electrode which is less oriented, has high acceptance of lithium ions, and sufficiently maintains the conductivity of the electrode by using carbon black in which a structure specified by DBP (Dibutyl phthalate) absorption is developed as a conductive aid in the negative electrode using graphite which is less deformed and oriented by pressurization, and that the battery using the negative electrode has excellent cycle characteristics.

An exemplary embodiment provides a lithium ion secondary battery comprising a negative electrode capable of absorbing and releasing lithium ion, a positive electrode capable of absorbing and releasing lithium ion, a separator for separating the negative electrode from the positive electrode, and a nonaqueous electrolyte solution in which lithium salt is dissolved, wherein
the negative electrode includes a negative electrode mixture including a negative electrode active material comprising graphite as a main component, a binder, and a conductive aid;
the graphite has a ratio of a peak intensity of a (002) plane to a peak intensity of a (110) plane in an X-ray diffraction spectrum of 30 or more and 70 or less, the spectrum being measured after the negative electrode mixture is formed and pressed at a pressure of 98 MPa (1000 kgf/cm²); and
the conductive aid is carbon black having a DBP absorption (cm³/100 g) of 250 or more and 500 or less.

An exemplary embodiment provides a lithium ion secondary battery in which the negative electrode mixture is pressed at a pressure of 98 MPa (1000 kgf/cm²) or more to be formed on the current collector, and the negative electrode mixture after being pressed has an electrode density of 1.3 g/cm³ or more and 1.6 g/cm³ or less.

An exemplary embodiment provides a lithium ion secondary battery in which the graphite has an R value of 0.01 to 0.1, wherein the R value refers to the ratio of the peak intensity around 1360 cm⁻¹ to the peak intensity around 1580 cm⁻¹ in a laser-Raman spectrum.

An exemplary embodiment provides a lithium ion secondary battery in which the graphite is vein artificial graphite which surface is substantially not coated with amorphous carbon.

An exemplary embodiment provides a lithium ion secondary battery in which the graphite includes a region of a graphite structure and a region of an amorphous structure dispersed from the surface of a particle to the center thereof.

An exemplary embodiment provides a lithium ion secondary battery which contains, as an additive in the nonaqueous electrolyte solution, a cyclic disulfonate represented by Formula (1).

### Advantageous Effects of Invention

The movement of lithium ions can become smooth and the degradation by the breakage of particles at the time of pressing can be suppressed by using a less oriented and hard graphite in which the graphite has a ratio of the peak intensity of the (002) plane to the peak intensity of the (110) plane in an X-ray diffraction spectrum of 30 or more and 70 or less, the spectrum being measured after the negative electrode mixture is pressed at a pressure of 98 MPa (1000 kgf/cm²). Further, use of carbon black having a DBP absorption of 250 cm³/100 g or more as a conductive aid allows a strong conductive network to be formed in the electrode, thereby significantly improving the reduction in electrode conductivity which has been a problem when the above graphite is used. This results in the improvement in negative electrode performance, which allows a lithium ion secondary battery excellent in cycle characteristics to be provided.

### Description of Embodiment

Hereinafter, the exemplary embodiment will be described.

### (Battery Construction)

A lithium ion secondary battery includes a negative electrode in which a negative electrode mixture layer is formed on a negative electrode current collector, the negative electrode mixture layer containing a negative electrode active material capable of absorbing and releasing lithium ions. The lithium ion secondary battery further includes a positive electrode in which a positive electrode mixture layer is formed on a positive electrode current collector, the positive electrode mixture layer containing a positive electrode active material capable of absorbing and releasing lithium ions. The negative electrode and the positive electrode are oppositely arranged via a separator. The lithium secondary battery further includes a nonaqueous electrolyte solution in which a lithium salt is dissolved.

### (Negative Electrode)

The negative electrode includes a negative electrode mixture formed on a current collector, the negative electrode mixture including a negative electrode active material comprising graphite as a main component, a binder, and a conductive aid. Also, the negative electrode includes a negative electrode mixture layer formed on at least one surface of the negative electrode current collector. The negative electrode mixture layer includes a composite in which the negative electrode active material as a main material and the conductive aid are combined with the binder.

The negative electrode active material comprises graphite as a main component. The negative electrode active material may includes, in addition to graphite, carbon materials such as amorphous carbon, materials which can form alloys with Li such as Si, Sn, or Al, Si oxides, Si composite oxides containing Si and metal elements other than Si, Sn oxides, Sn composite oxides containing Sn and metal elements other than Sn, or Li₄Ti₅O₁₂, wherein these materials may be mixed for use.

Graphite is roughly classified into natural graphite and artificial graphite, and generally, natural graphite has a tendency of higher orientation by pressurization than artificial graphite. For this reason, artificial graphite is superior to natural graphite in terms of the acceptance of lithium ions and the impregnating ability of the electrolyte solution and has a lower reactivity with the electrolyte solution than natural graphite. Therefore, graphite preferably comprises artificial graphite as a main component in the applications where a long life is required.

The graphite has various shapes such as a vein shape, a flake shape, and a spheroidal shape, vein graphite and spheroidal graphite being less oriented at the time of pressurization than flake graphite. Further, particles in vein graphite are more easily brought into contact with each other than those in spheroidal graphite. Therefore, graphite preferably has a vein form. Therefore, it is more preferred to use vein artificial graphite as graphite.

The particle size and specific surface area of graphite affect the coating properties of slurry and cycle characteristics. Therefore, graphite preferably has an average particle size of 5 to 40 µm and a specific surface area of 0.4 to 10 m²/g, more preferably an average particle size of 10 to 25 µm and a specific surface area of 0.5 to 1.5 m²/g. Further, as the negative electrode active material, vein artificial graphite having an average particle size of 10 to 25 µm and a specific surface area of 0.5 to 1.5 m²/g is particularly preferred. The average particle size (d50) can be defined as a particle size when the accumulated weight (volume) of particles is 50% in a particle size distribution curve. This can be measured by a laser diffraction and scattering method (micro-track method). The specific surface area can be measured by a BET method using N₂ gas.

In the exemplary embodiment, a graphite including particles which are less oriented by pressurization is used for the negative electrode active material. Concretely, a graphite material specified by an XRD diffraction intensity ratio I(002)/I(110) of 30 or more and 70 or less is preferred, the XRD diffraction intensity ratio being measured after the negative electrode mixture is formed and pressed at 98 MPa (1000 kgf/cm²). When I(002)/I(110) is 70 or less, the particles are less oriented, and the acceptance of lithium ions is satisfactory. The lower limit of I(002)/I(110) is not particularly limited as the battery performance, but actually, a value obtained when particles are completely randomly oriented (non-oriented) is regarded as the lower limit, and concretely, it is 30 or more.

The negative electrode mixture layer used for XRD measurement can be formed by a common method. It can be obtained by preparing a slurry by mixing and dispersing a graphite used as an active material, a conductive aid, a binder, and the like in a solvent such as NMP and applying the resulting slurry to a current collector (Cu), followed by drying to evaporate NMP. Generally, the proportion of graphite used as an active material in the negative electrode mixture is 90% or more, and the intensity ratio of XRD seldom changes in such a composition range.

The negative electrode mixture can be pressed with a uniaxial press, and pressing pressure is determined by dividing an actually applied load by the area of the negative electrode mixture. The pressing pressure of 98 MPa (1000 kgf/cm²) is a value used as a reference point for evaluating the orientation of a graphite material and does not mean the pressing pressure at the time of producing the negative electrode to be incorporated into an actual battery. Although it may be difficult to directly calculate pressing pressure in the roll press used in an actual mass production line, the XRD intensity can be evaluated, for example, after re-pressing the electrode with a uniaxial press after the roll press. The peak intensity ratio is determined from the ratio of the height of the peak in the vicinity of 26.4° corresponding to the (002) plane to the height of the peak in the vicinity of 77.2° corresponding to the (110) plane, wherein the height is obtained after removing the background. The background can be removed by drawing a baseline by linear approximation and subtracting a value of the baseline at the peak. Although the spectrum of the current collector (Cu) is also observed in the XRD spectrum, it does not affect the peak intensity ratio.

In the exemplary embodiment, a hard and deformation-resistant graphite is preferably used as the negative electrode, wherein in the graphite, the negative electrode mixture is pressed at a pressure of 98 MPa (1000 kgf/cm²) or more to be formed on the current collector, and the negative electrode mixture after pressing has an electrode density of 1.3 g/cm³ or more and 1.6 g/cm³ or less. The electrode density can be determined by dividing the weight per unit area (g/cm²) of the negative electrode mixture by the thickness (cm) of the negative electrode mixture. In such a negative electrode, the particles are hardly crushed when the electrode is pressed, which can prevent an increase in the reactivity with the electrolyte solution resulting from the exposure of newly produced surfaces. The negative electrode density is preferably 1.3 g/cm³ or more because if it is low, the volume energy density may be reduced. When the negative electrode density is 1.6 g/cm³ or less, the resulting battery can be suitably used for applications in which greater importance is placed on a long life and weight energy density such as a battery for electric vehicles.

According to the exemplary embodiment, it is preferred to use a graphite having an R value (a ratio of the peak intensity around 1360 cm⁻¹ to the peak intensity around 1580 cm⁻¹) in a laser-Raman spectrum of from 0.01 to 0.1, wherein the graphite is vein artificial graphite which surface is substantially not coated with amorphous carbon. The peak intensity ratio is determined by the ratio of the height of each peak. Generally, when the surface of an active material is coated with amorphous carbon, an improvement in cycle characteristics is expected due to the effects of reduction of the specific surface area and a reduction in reactivity with the electrolyte solution. On the other hand, the coating poses a problem that charge and discharge efficiency may be reduced due to the irreversible capacity of the amorphous carbon layer, thereby reducing the capacity of a battery. The presence of the amorphous carbon layer on the surface can be distinguished from the R value of a Raman spectrum, and when the amorphous carbon layer is present, the R value shows a value at least larger than 0.1. Vein artificial graphite suitable for the exemplary embodiment which has an R value of 0.1 or less and in which the amorphous carbon layer is not substantially present on the surface thereof can provide high charge and discharge efficiency and cycle characteristics. This is probably because the presence of the amorphous carbon layer on the surface will increase the irreversible capacity and reduce the quality of an SEI (Solid Electrolyte Interface) film which serves to suppress a reaction with the electrolyte solution.

According to the exemplary embodiment, the negative electrode active material may be a graphite in which a region of a graphite structure and a region of an amorphous structure are dispersed from the surface of a particle to the center thereof. The particle will be hard and resistant to deformation due to pressurization because fine amorphous regions are dispersed in the particle. As a result, orientation can be suppressed. Further, since the amorphous structure in the particle is few compared with the graphite structure and both the structures are almost uniformly dispersed, the charge and discharge efficiency is not impaired.

The graphite structure (crystalline graphite part) and the amorphous structure (amorphous carbon part) of the carbonaceous particles can be discriminated by the analysis of a bright field image of a transmission electron microscope.

Specifically, the bright field image is subjected to selected area electron diffraction (SAD), and the discrimination can be performed on the basis of the resulting pattern. Details are described in "Saishin no Tanso Zairyo Jikken Gijutsu (Bunseki/Kaiseki Hen) (Newest Carbon Material Experimental Technique (Assay/Analysis Section))" edited by The Carbon Society of Japan (SIPEC Corporation), November 30, 2001, pp. 18-26 and pp. 44-50.

Here, the crystalline graphite region refers to a region showing a characteristic feature as observed in a diffraction pattern of, for example, a product obtained through treating easy-graphitizable carbon at 2,800°C (in a selected area diffraction pattern, a diffraction pattern formed of two or more spots is shown). Further, the amorphous carbon region refers to a region showing a characteristic feature as observed in a diffraction pattern of, for example, a product obtained through treating hardly-graphitizable carbon at 1,200 to 2,800°C (in a selected area diffraction pattern, a diffraction pattern formed of only one spot attributed to (002) plane is shown).

On the other hand, although the negative electrode using a graphite which is hardly oriented and in which particles are hard and resistant to deformation as described above has an advantage because the movement of lithium ions is smooth and the breakage of particles at the time of pressing is suppressed, the contact area between the particles in the electrode may be reduced, resulting in a point contact, which may lose the contact between the particles due to the expansion and shrinkage accompanying the charge and discharge cycle, thereby reducing cycle characteristics. Therefore, it was necessary to use, in such graphite, a suitable conductive aid which sufficiently holds the conductivity of the electrode.

Generally, various carbon materials such as flake graphite, granular carbon, and carbon black are used as a conductive aid. There are various types of carbon black which differ in particle size, specific surface area, DBP absorption, and the like. Carbon black having higher DBP absorption has a more developed structure in which carbon particles are connected in chains, which functions as a network of electronic conduction in the electrode. This structure also serves to hold the electrolyte solution and contributes to improvement in the ion conductivity in the electrode. It is generally expected that use of carbon black having a developed structure as a conductive aid improves the electron conductivity of the electrode to thereby improve cycle characteristics. However, an improvement in cycle characteristics by the conductive aid has been considered to be limited because the graphite itself which is an active material has high electron conductivity in the negative electrode. Therefore, much attention has not been paid to the DBP absorption of the conductive aid in the negative electrode mixture. Note that the DBP adsorption can be measured according to JIS K 6217-4.

According to the exemplary embodiment, electrical contact between particles, which poses a problem when using a graphite which is less oriented and less deformed, can be significantly improved by using carbon black having a DBP absorption of 250 cm³/100 g or more. On the other hand, if DBP absorption exceeds 500 cm³/100 g, most dispersion medium of electrode slurry is absorbed by carbon black to significantly increase viscosity, which may reduce handleability of the slurry or may reduce the coating properties of the electrode. Therefore, the DBP absorption (cm³/100 g) is preferably 250 or more and 500 or less.

The content of the conductive aid is preferably 0.2% by mass or more and 3.0% by mass or less, more preferably 0.5% by mass or more and 1.5% by mass or less, relative to the negative electrode mixture. When the amount of the conductive aid is 0.2% by mass or more, the conductivity of the electrode can be easily maintained. Further, when the amount of the conductive aid is 1.5% by mass or less, the viscosity of the electrode slurry can be prevented from being excessively high to thereby easily improve the coating properties and an increase in irreversible capacity is suppressed to thereby easily improve charge and discharge efficiency.

Examples of the binder include, but are not particularly limited to, polyvinylidene fluoride (PVDF), styrene-butadiene rubber (SBR), and acrylic polymer. For organic binders, N-methyl-2-pyrrolidone (NMP) is generally used as a solvent of slurry. Further, for an aqueous binder such as an SBR emulsion, a thickener such as carboxymethyl cellulose (CMC) can be used. Since SBR and acrylic polymer are less swellable in the electrolyte solution than PVDF, they can be suitably used as a binder of the exemplary embodiment. The content of the binder is preferably 0.5% by mass or more and 10% by mass or less, more preferably 1% by mass or more and 5% by mass or less, relative to the negative electrode mixture. When the content of the binder is 0.5% by mass or more, sufficient adhesion can be easily obtained. Further, when the content of the binder is 10% by mass or less, the reduction of the capacity of a battery can be easily prevented.

### (Current Collector)

Examples of the positive electrode current collector which can be used include, but are not particularly limited to, aluminum, stainless steel, nickel, titanium, and alloys thereof. Further, examples of the negative electrode current collector which can be used include, but are not particularly limited to, copper, stainless steel, nickel, titanium, and alloys thereof.

### (Separator)

Examples of the separator to be used include, but are not particularly limited to, porous films of polyolefins such as polypropylene and polyethylene, fluororesins, and the like.

### (Positive Electrode)

Examples of the positive electrode active materials which can be used include, but are not particularly limited to, a positive electrode active material which can absorb and release lithium ions. For example, a lithium-containing composite oxide is used as a positive electrode active material. More specific examples of the lithium-containing composite oxide which can be used include materials such as LiMO₂ (wherein M is one or a mixture of two or more selected from Mn, Fe, Co, and Ni, wherein a part thereof may be substituted by other cations such as Mg, Al, and Ti) and LiMn₂₋ₓAₓO₄ (wherein A is at least one element other than Mn). Examples of the additional element (A) include Mg, Al, Co, Ni, Fe, and B. Olivine-type materials represented by LiFePO₄ can also be used. These may be of a non-stoichiometric composition such as Li excess composition. Among these, although lithium manganate represented by LiMn₂₋ₓAₓO₄ especially has a lower capacity than lithium cobaltate (LiCoO₂) and lithium nickelate (LiNiO₂), it has advantages of low material cost due to a higher quantity of output of Mn than that of Ni or Co and high thermal stability because it has a spinel structure. For this reason, the lithium manganate represented by LiMn₂₋ₓAₓO₄ is suitably used as a positive electrode material for a large-sized battery for electric vehicles, power storage, and the like. Therefore, the positive electrode active material preferably comprises lithium manganate as a main component.

The negative electrode and the positive electrode can be produced, for example, as follows. First, the above active material and conductive aid are dispersed and kneaded in a solvent such as NMP, together with a binder such as PVDF to prepare slurry. Next, the slurry is applied to the above current collector using a doctor blade or the like on a hot plate, followed by drying the solvent to thereby prepare the electrodes. The resulting electrodes can be compressed by a method such as a roll press to be controlled to a suitable density.

### (Electrolyte Solution)

A nonaqueous solvent in which an electrolyte is dissolved can be used for an electrolyte solution. In the case of the lithium secondary battery, a lithium salt can be used for the electrolyte. Examples of the lithium salt include, but are not particularly limited to, a lithium imide salt, LiPF₆, LiAsF₆, LiAlCl₄, LiClO₄, LiBF₄, and LiSbF₆. Among these, LiPF₆ and LiBF₄ are preferred. Examples of the lithium imide salt include LiN(CₖF₂ₖ₊₁SO2)(CₘF₂ₘ₊₁SO₂) (wherein k and m are independently 1 or 2). These may be used singly or in combinations of two or more.

Examples of the nonaqueous solvent which can be used include, but are not limited to, at least one organic solvent selected from the group of organic solvents consisting of cyclic carbonates, chain carbonates, aliphatic carboxylates, γ-lactones, cyclic ethers, chain ethers, and fluorinated derivatives thereof. Examples of the cyclic carbonates include propylene carbonate (PC), ethylene carbonate (EC), butylene carbonate (BC), and derivatives thereof. Examples of chain carbonates include dimethyl carbonate (DMC), diethyl carbonate (DEC), ethyl methyl carbonate (EMC), dipropyl carbonate (DPC), and derivatives thereof. Examples of the aliphatic carboxylates include methyl formate, methyl acetate, ethyl propionate, and derivatives thereof. Examples of the γ-lactones include γ-butyrolactone and derivatives thereof. Examples of the cyclic ethers include tetrahydrofuran and 2-methyltetrahydrofuran. Examples of the chain ethers include 1,2-diethoxy ethane (DEE), ethoxymethoxyethane (EME), diethyl ether, and derivatives thereof. Further, examples of other organic solvents include dimethyl sulfoxide, 1,3-dioxolane, formamide, acetamide, dimethylformamide, dioxolane, acetonitrile, propylnitrile, nitromethane, ethyl monoglyme, triester phosphate, trimethoxymethane, dioxolane derivatives, sulfolane, methyl sulfolane, 1,3-dimethyl-2-imidazolidinone, 3-methyl-2-oxazolidinone, propylene carbonate derivatives, tetrahydrofuran derivatives, ethyl ether, 1,3-propane sultone, anisole, N-methyl pyrrolidone, and fluorinated carboxylates. These may be used singly or in combinations of two or more.

In order to form an SEI film of good quality on the surface of the negative electrode, an additive may be added to the electrolyte solution. The SEI film acts to suppress the reactivity with the electrolyte solution or to smooth the desolvation reaction accompanying the insertion and elimination of lithium ions to thereby prevent the structural degradation of the active material. Examples of such an additive include propane sultone (PS), vinylene carbonate (VC), and cyclic disulfonate. Since the cyclic disulfonate can form a fine SEI film of good quality, it is particularly preferred. Here, the cyclic disulfonate refers to a compound represented by Formula (1) below. The content of the additive is, for example, preferably 0.1 % by mass or more and 10% by mass or less, more preferably 0.5% by mass or more and 3% by mass or less in the electrolyte solution. When the content of the additive is 0.5% by mass or more, a film of good quality can be easily formed. When the content of the additive is 10% by mass or less, an increase in resistance can be suppressed, and generation of a large amount of gas can be suppressed.

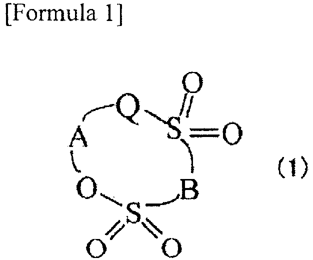

wherein Q represents an oxygen atom, a methylene group, or a single bond; A represents a substituted or unsubstituted alkylene group having 1 to 5 carbon atoms which may be branched, a carbonyl group, a sulfinyl group, a substituted or unsubstituted perfluoroalkylene group having 1 to 5 carbon atoms which may be branched, a substituted or unsubstituted fluoroalkylene group having 2 to 6 carbon atoms which may be branched, a substituted or unsubstituted alkylene group having 1 to 6 carbon atoms which contains an ether bond and may be branched, a substituted or unsubstituted perfluoroalkylene group having 1 to 6 carbon atoms which contains an ether bond and may be branched, or a substituted or unsubstituted fluoroalkylene group having 2 to 6 carbon atoms which contains an ether bond and may be branched; and B represents a substituted or unsubstituted alkylene group, a substituted or unsubstituted fluoroalkylene group, or an oxygen atom.

Specific examples of the compound represented by Formula (1) are illustrated in Table 1. These compounds may be used singly or in combinations of two or more.

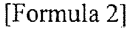

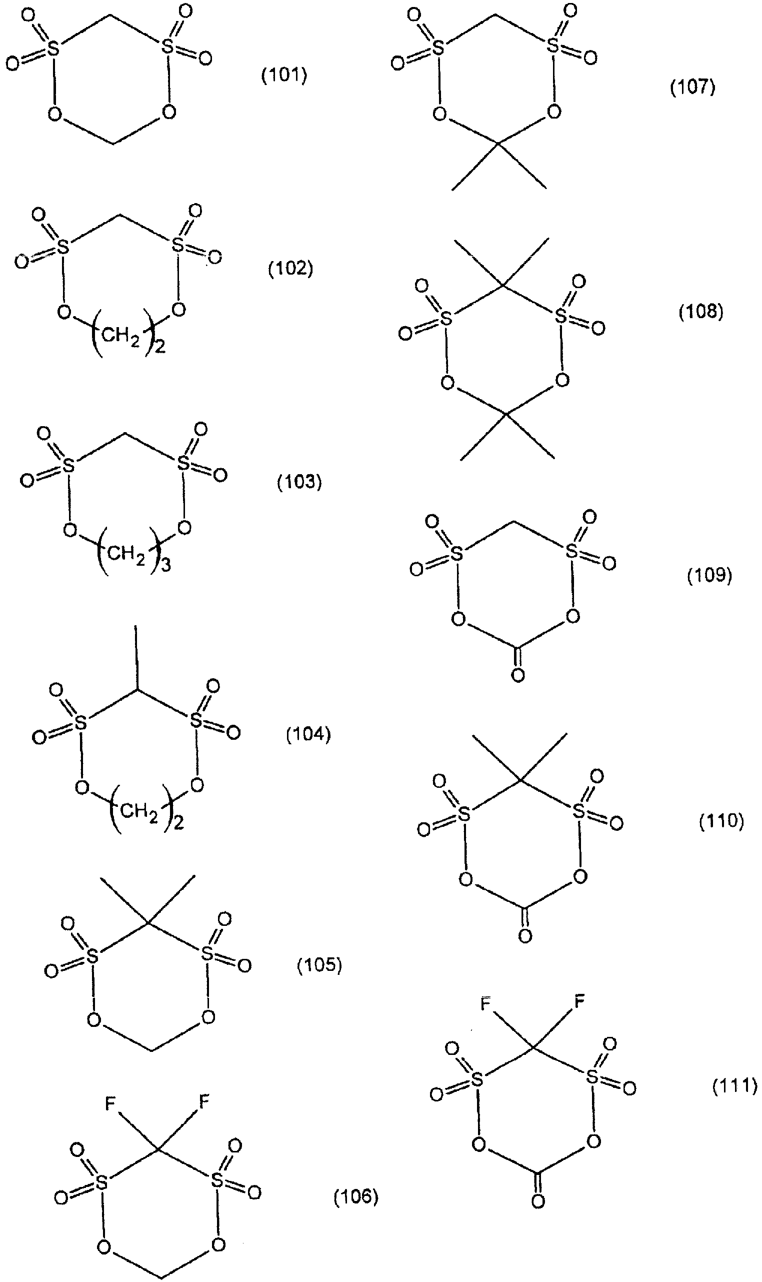

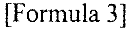

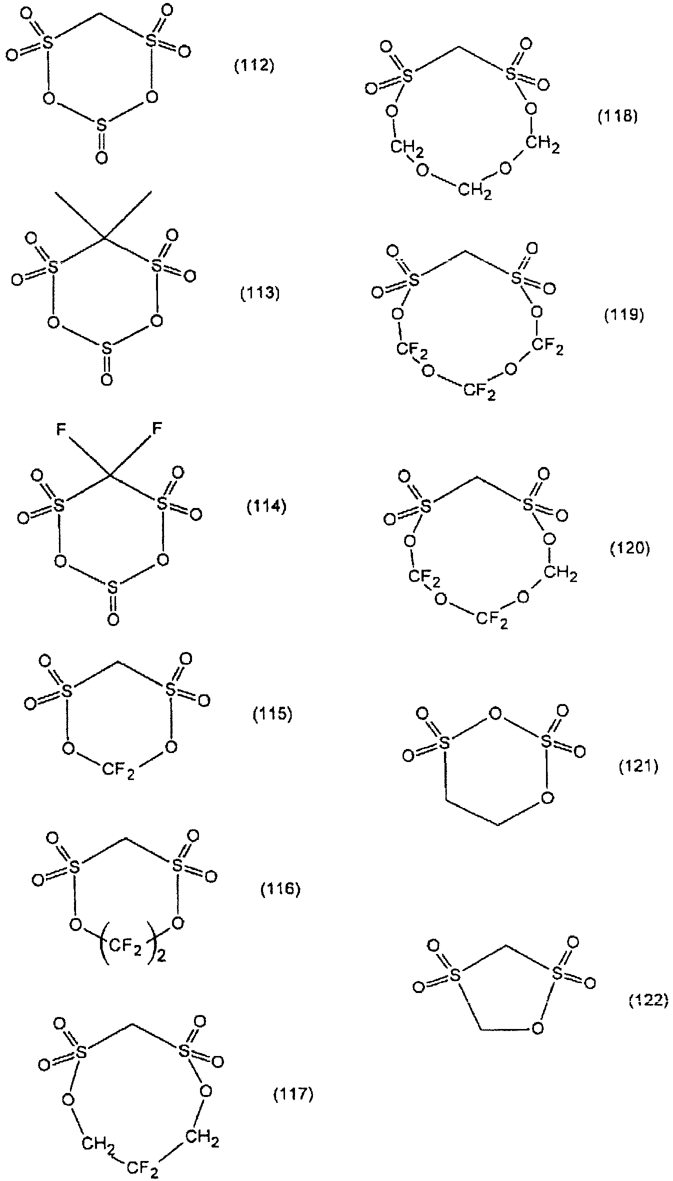

The outer packaging body of the lithium ion secondary battery according to the exemplary embodiment is preferably a laminated outer packaging body, but is not particularly limited thereto. A laminated outer packaging body made of a flexible film comprising a laminate of a synthetic resin and metal foil allows the reduction of weight and is preferred in terms of achieving an improvement in battery energy density. Further, since the laminate type battery is also excellent in heat dissipation, it can be suitably used as a battery for vehicles such as an electric vehicle.

### Examples

Examples of the present invention will be described in detail below, but the present invention is not limited only to the following examples.

### (Example 0-1)

### (Preparation of Negative Electrode)

A slurry was prepared by kneading and dispersing, in ion exchange water, artificial graphite A (average particle size D50:17 µm, specific surface area: 1 m²/g) which is vein artificial graphite as a negative electrode active material, carbon black (average particle size: 40 nm, specific surface area: 800 m²/g) having a DBP absorption (cm³/100 g) of 360 as a conductive aid, SBR as a binder, and CMC as a thickener, in a mass ratio of 97.5:0.5:1:1. The slurry was applied to copper foil having a thickness of 15 µm used as a negative electrode current collector, followed by allowing water to evaporate at 50°C for 10 minutes. Then, the slurry was further dried at 110°C for 30 minutes to thereby form a negative electrode mixture layer. Then, the negative electrode mixture layer was pressed to prepare a one-side coated negative electrode having a negative electrode density of 1.40 g/cm². The amount of the negative electrode mixture per unit area after drying was 0.008 g/cm².

### (Preparation of Positive Electrode)

A slurry was prepared by uniformly dispersing, in NMP, a Li_{1.1}Mn_{1.9}O₄ powder having an average particle size D50 of 10 µm as a positive electrode active material, PVDF as a binder, and carbonaceous powder as a conductive aid, in a mass ratio of 92:4:4. The slurry was applied to aluminum foil having a thickness of 20 µm used as a positive electrode current collector. Then, NMP was allowed to evaporate at 125°C for 10 minutes to thereby form a positive electrode mixture layer. The amount of the positive electrode mixture per unit area after drying was 0.025 g/cm²

### (Electrolyte Solution)

As an electrolyte solution, there was used a solution of 1 mol/L of LiPF₆ as an electrolyte in EC:DEC = 30:70 (% by volume) as a solvent.

### (Preparation of Laminate Type Battery)

The positive electrode and the negative electrode prepared as described above were each cut into a size of 5 cm x 6.0 cm, in which a portion of 5 cm x 1 cm on an edge was an uncoated portion for connecting a tab. An active material layer was formed in the portion of 5 cm x 5 cm. A positive electrode tab made from aluminum having a width of 5 mm, a length of 3 cm, and a thickness of 0.1 mm was ultrasonically welded to the uncoated portion of the positive electrode by 1 cm in length. Similarly, a negative electrode tab made from nickel having the same size as the positive electrode tab was ultrasonically welded to the uncoated portion of the negative electrode. The above negative electrode and positive electrode were arranged on both sides of a separator comprising polyethylene and polypropylene and having a size of 6 cm x 6 cm so that the active material layers may overlap with each other with the separator in between, thus obtaining an electrode laminate. Three edges of two aluminum laminate films each having a size of 7 cm x 10 cm, excluding one longer edge thereof, were heat sealed by a width of 5 mm to prepare a bag-shaped laminated outer packaging body. The above electrode laminate was inserted into the laminated outer packaging body so that the electrode laminate might be positioned 1 cm away from one of the shorter edges of the laminated outer packaging body. The laminate type battery was prepared by pouring the above nonaqueous electrolyte solution in an amount 1.5 times the hole volume which the above electrode laminate has, allowing the electrode laminate to be vacuum impregnated with the nonaqueous electrolyte solution, and then heat sealing the opening under reduced pressure to seal the opening by a width of 5 mm.

### (Cycle Test)

The cycle test of the laminate type battery prepared as described above was performed. Concretely, a charge and discharge cycle was repeated 500 times, wherein one cycle includes charging to 4.2 V at a constant current of 60 mA, then performing 4.2 V constant-voltage charge for 2.5 hours in total, and then performing constant-current discharge at 60 mA to 3.0 V. The ratio of the discharge capacity after 500 cycles to the first discharge capacity was calculated as a capacity retention rate (%). Test temperature was set to 60°C for the purpose of the degradation test and accelerated test in high-temperature environments.

### (Comparative Example 0-1)

A battery was prepared in the same manner as in Example 0-1 and cycle test was performed except that carbon black (average particle size: 35 nm, specific surface area: 68 m²/g) having a DBP absorption (cm³/100 g) of 175 was used as a conductive aid.

### (Comparative Example 0-2)

A battery was prepared in the same manner as in Example 0-1 and cycle test was performed except that artificial graphite C (average particle size D50: 30 µm, specific surface area: 1.2 m²/g) which is flake artificial graphite was used as a negative electrode active material.

### (Example 0-2)

A battery was prepared in the same manner as in Example 0-1 and cycle test was performed except that an electrolyte solution which was further mixed with 1.5% by mass of 1,3-propane sultone as an additive was used.

### (Example 0-3)

A battery was prepared in the same manner as in Example 0-1 and cycle test was performed except that an electrolyte solution which was further mixed with 1.5% by mass of vinylene carbonate as an additive was used.

Table 1 shows the I(002)/I(110) which was determined by measuring the XRD diffraction spectrum of the negative electrode pressed at 98 MPa (1000 kgf/cm²) and the capacity retention rate after 500 cycles at 60°C (hereinafter, simply referred to as the capacity retention rate), for Examples 0-1 to 0-3 and Comparative Examples 0-1 to 0-2. The XRD spectrum was obtained by using CuKα rays (a wavelength of 0.15418 nm) and measuring the range of 20 to 100° at a scanning speed of 2°/min at an interval of 0.01° in the X-ray intensity of 30 kV-15 mA. A battery having a I(002)/I(110) of 70 or less and a DBP absorption (cm³/100 g) of 250 or more provided a high capacity retention rate. On the other hand, a battery having a I(002)/I(110) of more than 70 had a low capacity retention rate. Note that carbon black having a DBP absorption (cm³/100 g) of 600 provided an electrode slurry having a significantly increased viscosity, whose coating was difficult, and since peeling of the active material layer from the current collector was observed, it was impossible to evaluate the battery. The above results have revealed that a battery having a I(002)/I(110) of 70 or less and a DBP absorption (cm³/100 g) of 250 to 500 is preferred.

**[Table 1]**

| Sample | Active material | I (002) / (110) | DBP absorption (cm²/100g) | Additive type | Capacity retention rate (%) |
|---|---|---|---|---|---|
| Example 0-1 | Artificial graphite A | 40 | 360 | Nothing | 50 |
| Example 0-2 | Artificial graphite A | 40 | 360 | 1.3-propane sultone | 53 |
| Example 0-3 | Artificial graphite A | 40 | 360 | Vinylene carbonate | 57 |
| Comparative Example 0-1 | Artificial graphite A | 40 | 175 | Nothing | 24 |
| Comparative Example 0-2 | Artificial graphite C | 90 | 360 | Nothing | 37 |

### (Example 1)

A battery was prepared in the same manner as in Example 0-1 and cycle test was performed except that carbon black (average particle size: 60 nm, specific surface area: 80 m²/g) having a DBP absorption (cm³/100 g) of 250 was used as a conductive aid, and an electrolyte solution which was further mixed with 1.5% by mass of an additive of the compound 102 as shown above as an additive were used.

### (Example 2)

A battery was prepared in the same manner as in Example 1 and cycle test was performed except that carbon black (average particle size: 40 nm, specific surface area: 800 m²/g) having a DBP absorption (cm³/100 g) of 360 was used as a conductive aid.

### (Example 3)

A battery was prepared in the same manner as in Example 1 and cycle test was performed except that carbon black (average particle size: 34 nm, specific surface area: 1270 m²/g) having a DBP absorption (cm³/100 g) of 500 was used as a conductive aid.

### (Example 4)

A battery was prepared in the same manner as in Example 1 and cycle test was performed except that artificial graphite B (average particle size D50: 30 µm, specific surface area: 1.2 m²/g) which is vein artificial graphite was used as a negative electrode active material.

### (Example 5)

A battery was prepared in the same manner as in Example 2 and cycle test was performed except that artificial graphite B (average particle size D50: 30 µm, specific surface area: 1.2 m²/g) which is vein artificial graphite was used as a negative electrode active material.

### (Comparative Example 1)

A battery was prepared in the same manner as in Example 1 and cycle test was performed except that carbon black (average particle size: 35 nm, specific surface area: 68 m²/g) having a DBP absorption (cm³/100 g) of 175 was used as a conductive aid.

### (Comparative Example 2)

A battery was prepared in the same manner as in Example 2 and cycle test was performed except that artificial graphite C (average particle size D50: 30 µm, specific surface area: 1.2 m²/g) which is flake artificial graphite was used as a negative electrode active material.

### (Comparative Example 3)

A battery was prepared in the same manner as in Comparative Example 2 and cycle test was performed except that carbon black (average particle size: 35 nm, specific surface area: 68 m²/g) having a DBP absorption (cm³/100 g) of 175 was used as a conductive aid.

### (Comparative Example 4)

A battery was prepared in the same manner as in Comparative Example 2 and cycle test was performed except that natural graphite A (average particle size D50: 20 µm, specific surface area: 1.0 m²/g) which is a spheroidal natural graphite coated with amorphous carbon was used as a negative electrode active material.

Table 2 shows the I(002)/I(110) which was determined by measuring the XRD diffraction spectrum of the negative electrode pressed at 98 MPa (1000 kgf/cm²) and the capacity retention rate after 500 cycles at 60°C (hereinafter, simply referred to as the capacity retention rate), for Examples 1 to 5 and Comparative Examples 1 to 4. The XRD spectrum was obtained by using CuKα rays (a wavelength of 0.15418 nm) and measuring the range of 20 to 100° at a scanning speed of 2°/min at an interval of 0.01° in the X-ray intensity of 30 kV-15 mA. A battery having a I(002)/I(110) of 70 or less and a DBP absorption (cm³/100 g) of 250 or more provided a high capacity retention rate. On the other hand, a battery having a I(002)/I(110) of more than 70 had a low capacity retention rate. Note that carbon black having a DBP absorption (cm³/100 g) of 600 provided an electrode slurry having a significantly increased viscosity, whose coating was difficult, and since peeling of the active material layer from the current collector was observed, it was impossible to evaluate the battery. The above results revealed that a battery having a I(002)/I(110) of 70 or less and a DBP absorption (cm³/100 g) of 250 to 500 is preferred.

Further, the amount of additives was variously changed (0.1, 1.0, 2.0, 3.0, 4.0, 5.0, 6.0, 7.0, 8.0, 9.0% by weight), and substantially the same effect as described above was obtained.

**[Table 2]**

| Sample | Active material | I (002)/I (110) | DBP absorption (cm²/100g) | Capacity retention rate (%) |
|---|---|---|---|---|
| Example 1 | Artificial Graphite A | 40 | 250 | 67 |
| Example 2 | Artificial graphite A | 40 | 360 | 70 |
| Example 3 | Artificial graphite A | 40 | 500 | 67 |
| Examples 4 | Artificial graphite B | 70 | 250 | 62 |
| Example 5 | Artificial graphite B | 70 | 360 | 64 |
| Comparative Example 1 | Artificial graphite A | 40 | 175 | 31 |
| Comparative Example 2 | Artificial graphite C | 90 | 360 | 49 |
| Comparative Examples 3 | Artificial graphite C | 90 | 175 | 50 |
| Comparative Example 4 | Natural graphite A | 140 | 360 | 40 |

### (Example 6)

A battery was prepared in the same manner as in Example 2 and cycle test was performed except that a negative electrode which was pressed at 98 MPa (1000 kgf/cm²) and had a density of 1.33 g/cm³ was used.

### (Example 7)

A battery was prepared in the same manner as in Example 2 and cycle test was performed except that a negative electrode which was pressed at 196 MPa (2000 kgf/cm²) and had a density of 1.52 g/cm³ was used.

### (Example 8)

A battery was prepared in the same manner as in Example 2 and cycle test was performed except that a negative electrode which was pressed at 490 MPa (5000 kgf/cm²) and had a density of 1.57 g/cm³ was used.

### (Example 9)

A battery was prepared in the same manner as in Example 5 and cycle test was performed except that a negative electrode which was pressed at 98 MPa (1000 kgf/cm²) and had a density of 1.60 g/cm³ was used.

### (Example 10)

A battery was prepared in the same manner as in Example 5 and cycle test was performed except that a negative electrode which was pressed at 196 MPa (2000 kgf/cm²) and had a density of 1.75 g/cm³ was used.

The density and the capacity retention rates of the negative electrodes in Examples 6 to 10 are shown in Table 3. Artificial graphite A having an electrode density of 1.3 to 1.6 g/cm³ when pressed at 98 MPa (1000 kgf/cm²) or more provided a high capacity retention rate. This is probably because artificial graphite A which is resistant to deformation due to pressurization tends to be less degraded by crushing of particles.

**[Table 3]**

| Sample | Active material | Pressing pressure (MPa (kgf/cm²)) | Density (g/cm³) | Capacity retention rate (%) |
|---|---|---|---|---|
| Example 6 | Artificial graphite A | 98 (1000) | 1.33 | 70 |
| Example 7 | Artificial graphite A | 196 (2000) | 1.52 | 69 |
| Example 8 | Artificial graphite A | 490 (5000) | 1.57 | 68 |
| Example 9 | Artificial graphite B | 98 (1000) | 1.60 | 63 |
| Example 10 | Artificial graphite B | 19 (2000) | 1.75 | 58 |

### (Example 11)

Charge and discharge efficiency was determined for the secondary battery obtained in Example 2.

Charge and discharge efficiency was determined as the ratio of the first discharge capacity to the first charge capacity (first discharge capacity/first charge capacity x 100).

Further, a powder of artificial graphite A was subjected to measurement of a laser-Raman spectrum to determine the R value (the ratio of the peak intensity around 1360 cm⁻¹ to the peak intensity around 1580 cm⁻¹). The Raman spectrum was measured in a macro-Raman mode (beam diameter: 100 µm) using Ar⁺ laser (wavelength: 514.5 nm, beam intensity: 10 mW). The Raman intensity ratio was determined as a ratio of the height of each peak.

### (Example 12)

The charge and discharge efficiency was determined in the same manner as in Example 11 for the secondary battery obtained in Example 5.

The R value was determined in the same manner as in Example 11 for the powder of artificial graphite B.

### (Example 13)

The R value was determined in the same manner as in Example 11 for artificial graphite A', which was prepared by coating artificial graphite A with 5% by mass of amorphous carbon using a CVD method.

A battery was prepared in the same manner as in Example 2 except that artificial graphite A' was used instead of artificial graphite A. The resulting battery was subjected to cycle test and determined for charge and discharge efficiency.

Table 4 shows the charge and discharge efficiency (discharge capacity/charge capacity x 100%) at the first charge and discharge and the capacity retention rates in Examples 11, 12, and 13. Here, since the battery in Example 11 is the same one as in Example 2 and the battery in Example 12 is the same one as in Example 5, the capacity retention rates in Examples 11 and 12 are the same as those in Examples 2 and 5, respectively. When the R value was 0.1 or less, the resulting batteries had a high charge and discharge efficiency and a high capacity retention rate. On the other hand, a battery having an R value increased to 0.25 by the coating with amorphous carbon had a reduced charge and discharge efficiency and a reduced capacity retention rate. This is probably because the irreversible capacity of the amorphous carbon layer is large, and the quality of surface SEI film has deteriorated.

Artificial graphite A was cut into a thin piece, whose cross section was observed for a selected area diffraction pattern of the bright field image of a transmission electron microscope. It was found that a graphite structure having a diffraction pattern formed of two or more spots and an amorphous structure having a diffraction pattern formed of only one spot attributed to (002) plane are present dispersed in a particle. The ratio of the graphite structure to the amorphous structure was estimated to be about 90:10. The same structure was not observed in artificial graphite B.

**[Table 4]**

| Sample | Active material | R value | Charge and discharge efficiency (%) | Capacity retention rate (%) |
|---|---|---|---|---|
| Example 11 | Artificial graphite A | 0.07 | 90 | 70 |
| Example 12 | Artificial graphite B | 0.08 | 90 | 64 |
| Example 13 | Artificial graphite A' | 0.25 | 86 | 63 |

This application claims the priority based on Japanese Patent Application No. 2010-063030 filed on March 18, 2010, the disclosure of which is incorporated herein in its entirety.

Hereinabove, the present invention has been described with reference to the exemplary embodiment and examples, but the present invention is not limited to the above exemplary embodiments and examples. Various modifications which those skilled in the art can understand can be made to the constitution and details of the present invention within the scope of the present invention.

## Claims

1. A lithium ion secondary battery comprising a negative electrode capable of absorbing and releasing lithium ion, a positive electrode capable of absorbing and releasing lithium ion, a separator for separating the negative electrode from the positive electrode, and a nonaqueous electrolyte solution in which lithium salt is dissolved, wherein
the negative electrode includes a negative electrode mixture formed on a current collector, the negative electrode mixture including a negative electrode active material comprising graphite as a main component, a binder, and a conductive aid;
the graphite has a ratio of a peak intensity of a (002) plane to a peak intensity of a (110) plane in an X-ray diffraction spectrum of 30 or more and 70 or less, the spectrum being measured after the negative electrode mixture is formed and pressed at a pressure of 98 MPa (1000 kgf/cm²); and
the conductive aid is carbon black having a DBP absorption (cm³/100 g) of 250 or more and 500 or less.

2. The lithium ion secondary battery according to claim 1, wherein in the negative electrode, the negative electrode mixture is pressed to be formed on the current collector, and the negative electrode mixture after being pressed has an electrode density of 1.3 g/cm³ or more and 1.6 g/cm³ or less.

3. The lithium ion secondary battery according to claim 1 or 2, wherein the graphite has an R value of 0.01 1 or more and 0.1 or less, wherein the R value is the ratio of a peak intensity around 1360 cm⁻¹ to a peak intensity around 1580 cm⁻¹ in a laser-Raman spectrum.

4. The lithium ion secondary battery according to claim 3, wherein the graphite is vein artificial graphite which surface is substantially not coated with amorphous carbon.

5. The lithium ion secondary battery according to claim 4, wherein the graphite includes a region of a graphite structure and a region of an amorphous structure dispersed from the surface of a particle to the center thereof.

6. The lithium ion secondary battery according to any one of claims 1 to 5, containing, as an additive in the nonaqueous electrolyte solution, a cyclic disulfonate represented by Formula (1) below: 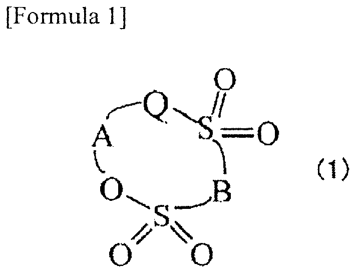 wherein Q represents an oxygen atom, a methylene group, or a single bond; A represents a substituted or unsubstituted alkylene group having 1 to 5 carbon atoms which may be branched, a carbonyl group, a sulfinyl group, a substituted or unsubstituted perfluoroalkylene group having 1 to 5 carbon atoms which may be branched, a substituted or unsubstituted fluoroalkylene group having 2 to 6 carbon atoms which may be branched, a substituted or unsubstituted alkylene group having 1 to 6 carbon atoms which contains an ether bond and may be branched, a substituted or unsubstituted perfluoroalkylene group having 1 to 6 carbon atoms which contains an ether bond and may be branched, or a substituted or unsubstituted fluoroalkylene group having 2 to 6 carbon atoms which contains an ether bond and may be branched; and B represents a substituted or unsubstituted alkylene group, a substituted or unsubstituted fluoroalkylene group, or an oxygen atom.
